Europäisches Patentamt

European Patent Office

Office européen des brevets

(19)

(11) **EP 0 949 565 A1**

## (12) DEMANDE DE BREVET EUROPEEN

(43) Date de publication:
**13.10.1999 Bulletin 1999/41**

(51) Int Cl.⁶: **G06F 9/38**

(21) Numéro de dépôt: **99410030.3**

(22) Date de dépôt: **07.04.1999**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **09.04.1998 FR 9804710**

(71) Demandeur: **STMicroelectronics S.A.**
**94250 Gentilly (FR)**

(72) Inventeur: **Fuin, Didier**
**38660 Lumbin (FR)**

(74) Mandataire: **de Beaumont, Michel**
**1, rue Champollion**
**38000 Grenoble (FR)**

(54) **Architecture de DSP optimisée pour les accès mémoire**

(57) L'invention concerne un processeur comprenant au moins un module d'accès mémoire (MEMU) destiné à présenter une adresse de lecture ou d'écriture sur un bus d'adresses d'une mémoire (16) en réponse à l'exécution d'une instruction de lecture ou d'écriture ; et un module arithmétique et logique (ALU) fonctionnant en parallèle avec le module d'accès mémoire et prévu au moins pour présenter une donnée sur un bus de données de la mémoire tandis que le module d'accès mémoire présente une adresse d'écriture. Le processeur comprend une file d'adresses d'écriture (STAQ) dans laquelle est stockée chaque adresse d'écriture fournie par le module d'accès mémoire en attente de la disponibilité de la donnée à écrire.

Fig 2

Printed by Jouve, 75001 PARIS (FR)

# Description

La présente invention concerne un processeur de signal numérique, plus couramment appelé DSP, et plus particulièrement une architecture permettant d'éviter des problèmes dus à la latence de réponse d'une mémoire.

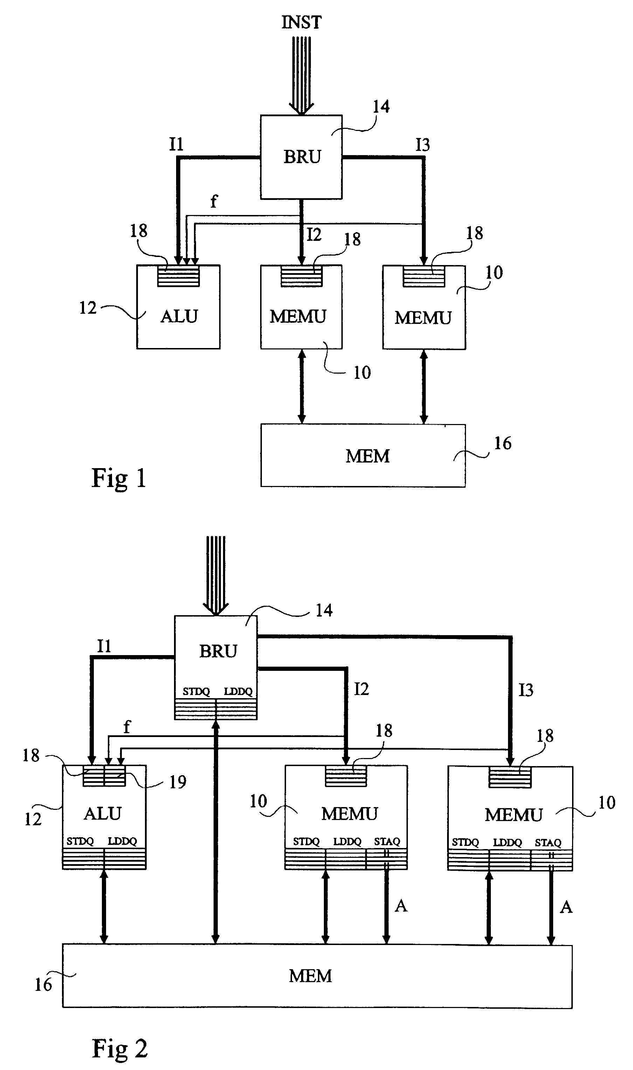

La figure 1 représente schématiquement et partiellement une architecture de DSP classique. Le DSP comprend quatre modules ou unités de traitement fonctionnant en parallèle. Deux de ces modules sont des modules d'accès mémoire (MEMU) 10. Il est par ailleurs prévu un module arithmétique et logique (ALU) 12 et un module de gestion de branchement (BRU) 14. Chacun des modules MEMU est relié à une mémoire 16 par l'intermédiaire d'un bus indépendant.

Le module de gestion de branchement BRU reçoit d'une mémoire d'instruction, non-représentée, une instruction composite INST pouvant être composée de quatre instructions élémentaires à fournir à chacun des modules en parallèle. Le module BRU récupère l'instruction qui lui est destinée et répartit en parallèle les trois instructions restantes I1, I2 et I3 aux modules ALU et MEMU.

Chacun des modules ALU et MEMU comprend généralement une file d'instructions 18, sous la forme d'une mémoire du type premier-entré/premier-sorti (FIFO), dans laquelle sont stockées les instructions en attente d'être traitées par le module correspondant.

Un DSP du type de la figure 1 est optimisé pour effectuer des opérations vectorielles du type X[i] OP Y[j], où i et j varient, généralement dans une boucle, et où OP désigne une opération quelconque à effectuer par le module arithmétique 12. En effet, les opérandes X[i] et Y[j] peuvent être cherchés en même temps par l'intermédiaire des deux bus de la mémoire 16 et traités, en théorie, dans le même cycle par le module arithmétique 12.

En pratique, on rencontre des difficultés du fait de la structure des mémoires couramment utilisées, généralement des mémoires statiques (SRAM). Bien que l'on puisse effectuer un accès mémoire à chaque cycle, la lecture d'une donnée dans une mémoire statique classique a généralement une latence de deux cycles. En effet, lors de l'exécution d'une instruction de lecture, on présente l'adresse à la mémoire. Un cycle supplémentaire est nécessaire pour fournir à la mémoire un signal d'accès en lecture, et un dernier cycle est nécessaire pour que la mémoire présente les données sur son bus de données.

Pour illustrer les difficultés que cela entraîne, on considère ci-après, à titre d'exemple, une boucle courante dont le rôle est d'incrémenter d'une constante des valeurs successives stockées en mémoire. Cette boucle peut s'écrire directement sous la forme :

$$LD : R1 = [i]$$

$$OP : R1 = R1 + R2$$

$$ST : [i] = R1$$

$$BR : test\ i,\ i{+}{+},\ boucler \qquad (1)$$

Cette boucle, par souci de clarté, n'utilise qu'un seul des modules MEMU. Elle consiste à charger (LD) dans un registre R1 la valeur stockée dans la mémoire à l'adresse i, à incrémenter (OP) le contenu du registre R1 par la valeur contenue dans un registre R2, à stocker (ST) à l'adresse i le nouveau contenu du registre R1, et finalement à incrémenter et tester l'adresse i pour recommencer la boucle (BR). La boucle sera quittée lorsque le module de gestion de branchement BRU détecte que l'adresse i a atteint une valeur prédéterminée. Dans un DSP il n'existe généralement pas d'instructions du type BR. Les boucles sont programmées à l'avance en initialisant des registres prévus à cet effet dans l'unité BRU qui effectue les tests, incrémentations et branchements de manière transparente.

Le registre R1 est un registre de travail du module arithmétique ALU, tandis que l'adresse i est stockée dans un registre du module de branchement BRU. Les opérations LD et ST sont des opérations à effectuer par l'un des modules MEMU, l'opération OP est à effectuer par le module ALU, et l'opération BR est à effectuer par le module BRU. Les opérations LD et OP seront fournies en parallèle aux modules MEMU et ALU dans une même instruction composite, tandis que les opérations ST et BR seront fournies en parallèle aux modules MEMU et BRU dans une deuxième instruction composite.

En fait, certaines instructions comportent des champs qui sont fournis à plusieurs modules à la fois. Par exemple, une instruction de lecture LD, destinée à un module MEMU, comporte également un champ destiné au module ALU pour préparer l'un de ses registres (R1) à recevoir la donnée qui sera présentée par la mémoire. De même, une instruction d'écriture ST comporte un champ destiné au module ALU pour sélectionner un registre dont le contenu est présenté sur le bus mémoire. Ainsi, comme cela est représenté en figure 1, un champ f de chacune des instructions I2 et I3 fournies aux modules MEMU est fourni à la file d'instructions 18 du module ALU parallèlement à une instruction normale I1, et le module ALU est capable d'exécuter en un cycle une instruction normale et une opération indiquée par un champ f.

La table ci-dessous illustre, pour plusieurs itérations de la boucle, les opérations effectuées par un module d'accès mémoire MEMU et par le module arithmétique ALU. Les instructions de branchement BR ne posent aucun problème et la table ne les illustre pas par souci de clarté.

Chaque rangée de la table correspond à un cycle d'instruction et chaque opération marquée dans la table est affectée d'un numéro correspondant à l'itération de la boucle.

| Cycle | Files d'instructions | | Modules | |
|---|---|---|---|---|
| | MEMU | ALU | MEMU | ALU |
| 1 | **LD1** | OP1 | LD1 | – |
| 2 | ST1 | <br>OP1 | – | – |
| 3 | LD2<br>ST1 | OP2<br><br>**OP1** | – | OP1 |
| 4 | ST2<br>LD2<br>**ST1** | <br>OP2<br> | ST1 | – |
| 5 | LD3<br>ST2<br>**LD2** | OP3<br><br>OP2 | LD2 | – |
| 6 | ST3<br>LD3<br>ST2 | <br>OP3<br><br>OP2 | – | – |
| 7 | LD4<br>ST3<br>LD3<br>ST2 | OP4<br><br>OP3<br><br>**OP2** | – | OP2 |
| 8 | ST4<br>LD4<br>ST3<br>LD3<br>**ST2** | <br>OP4<br><br>OP3<br> | ST2 | – |
| 9 | LD5<br>ST4<br>LD4<br>ST3<br>**LD3** | OP5<br><br>OP4<br><br>OP3 | LD3 | – |
| 10 | ST5<br>LD5<br>ST4<br>LD4<br>ST3 | <br>OP5<br><br>OP4<br><br>OP3 | – | – |
| 11 | LD6<br>ST5<br>LD5<br>ST4<br>LD4<br>ST3 | OP6<br><br>OP5<br><br>OP4<br><br>**OP3** | – | OP3 |

| 12 | ST6 | | ST3 | - |
|---|---|---|---|---|
| | LD6 | OP6 | | |
| | ST5 | | | |
| | LD5 | OP5 | | |
| | ST4 | | | |
| | LD4 | OP4 | | |
| | **ST3** | | | |

Au premier cycle, les modules MEMU et ALU reçoivent les premières instructions LD et OP (LD1, OP1). Le module MEMU exécute immédiatement l'instruction LD1, ce qui commence le cycle de lecture en mémoire de la valeur stockée à l'adresse i. L'instruction LD1 est effacée de la file d'instructions du module MEMU. L'instruction OP1, qui a besoin de la valeur demandée par l'instruction LD1, ne peut encore être exécutée. Cette instruction OP1 attend dans la file d'instructions du module ALU.

Au deuxième cycle, le module MEMU reçoit la première instruction ST (ST1). L'instruction ST1, qui a besoin du résultat de l'opération OP1, ne peut encore être exécutée et attend dans la file d'instructions du module MEMU. L'instruction OP1 attend toujours dans la file du module ALU, car la mémoire ne renvoie toujours pas l'opérande qu'elle requiert.

Au troisième cycle, les modules MEMU et ALU reçoivent les instructions LD2 et OP2. Ces instructions sont mises dans les files après les instructions non encore exécutées ST1 et OP1. La mémoire renvoie enfin l'opérande requis par l'instruction OP1. Cette instruction OP1 est alors exécutée et effacée de la file d'instructions.

Au cycle 4, le module MEMU reçoit l'instruction ST2. L'instruction ST2 est mise en attente dans la file du module MEMU après l'instruction LD2. L'instruction OP1 ayant été exécutée au cycle précédent, son résultat est disponible. L'instruction ST1 peut donc être exécutée et effacée de la file. Bien que l'instruction OP2 soit la seule dans la file du module ALU, cette instruction ne peut encore être exécutée car elle requiert un opérande qui sera demandé par l'exécution de l'instruction LD2.

Au cycle 5, les modules MEMU et ALU reçoivent les instructions LD3 et OP3. L'instruction LD2 est exécutée et effacée de la file. L'instruction OP2 doit encore attendre dans la file, car elle requiert l'opérande qui sera renvoyé par la mémoire deux cycles plus tard en réponse à l'instruction LD2.

A partir du cinquième cycle, l'exécution des instructions de la deuxième itération de boucle s'enchaîne comme celle de la première itération commençant au cycle 1.

Comme le montre la table, bien que le processeur puisse effectuer un accès mémoire à chaque cycle, on constate qu'il n'accède à la mémoire que deux cycles sur quatre, c'est-à-dire que l'efficacité d'exécution de la boucle n'est que de 50 %.

Par ailleurs, à chaque nouvelle itération de boucle, la file d'instructions du module MEMU se remplit de deux instructions supplémentaires et finit par déborder. Pour éviter le débordement, la fourniture d'instructions doit être régulièrement arrêtée pour permettre aux files de se vider. Ceci diminue notablement l'efficacité.

En fait, la programmation de la boucle sous sa forme la plus directe n'est pas du tout optimale du fait de la latence de la mémoire.

Pour améliorer l'efficacité compte tenu de la latence mémoire, on utilise souvent une technique de programmation de boucle appelée "unrolling" (développement). Cette technique consiste à programmer une macroboucle dont chaque itération correspond à plusieurs itérations de la boucle normale. Ainsi, la boucle précédente (1) s'écrit, par exemple, de la manière suivante :

$$LDa : R1 = [i]$$

$$OPa : R1 = R1 + R2$$

$$LDb : R3 = [i + 1]$$

$$OPb : R3 = R3 + R2$$

$$STa : [i] = R1$$

$$STb : [i + 1] = R3$$

$$BR : test\ i,\ i = +2,\ boucler \tag{2}$$

Dans cette boucle, on charge (LDa) dans le registre R1 la valeur contenue à l'adresse i, on incrémente (OPa) le contenu du registre R1 par le contenu d'un registre R2, on charge (LDb) dans un registre R3 la valeur contenue à l'adresse i+1, on incrémente (OPb) le contenu du registre R3 de la valeur contenue dans le registre R2, on stocke (STa) à l'adresse i le contenu du registre R1, on stocke (STb) à l'adresse i+l le contenu du registre R3, et on incrémente de 2 la variable i pour recommencer la boucle.

Cette boucle est programmée en quatre instructions composites. La première est constituée des opérations LDa et OPa, la deuxième des instructions LDb et OPb, la troisième de l'instruction STa, et la quatrième des instructions STb et BR. La table ci-dessous illustre le déroulement des opérations pour plusieurs itérations de boucle.

| Cycle | Files d'instructions | | Modules | |
|---|---|---|---|---|
| | MEMU | ALU | MEMU | ALU |
| 1 | **LDa1** | OPa1 | LDa1 | - |
| 2 | **LDb1** | OPb1<br>OPa1 | LDb1 | - |
| 3 | STa1 | OPb1<br>**OPa1** | - | OPa1 |
| 4 | STb1<br>STa1 | **OPb1** | - | OPb1 |
| 5 | LDa2<br>STb1<br>**STa1** | OPa2 | STa1 | - |
| 6 | LDb2<br>LDa2<br>**STb1** | Opb2<br>OPa2 | STb1 | - |
| 7 | STa2<br>LDb2<br>**LDa2** | OPb2<br>OPa2 | LDa2 | - |
| 8 | STb2<br>STa2<br>**LDb2** | OPb2<br>OPa2 | LDb2 | - |
| 9 | LDa3<br>STb2<br>STa2 | OPa3<br>OPb2<br>**OPa2** | - | OPa2 |
| 10 | LDb3<br>LDa3<br>STb2<br>STa2 | OPb3<br>OPa3<br>**OPb2** | - | OPb2 |

| 11 | STa3<br>LDb3<br>LDa3<br>STb2<br>**STa2** | <br>OPb3<br>OPa3 | STa2 | - |
|----|------|------|------|---|
| 12 | STb3<br>STa3<br>LDb3<br>LDa3<br>**STb2** | <br><br>OPb3<br>OPa3 | STb2 | - |

Au premier cycle, les modules MEMU et ALU reçoivent les premières instructions LDa et OPa (LDa1, OPa1) L'instruction LDal est immédiatement exécutée et effacée de la file d'attente.

Au deuxième cycle, les modules MEMU et ALU reçoivent les instructions LDb1 et OPb1. L'instruction LDb1 est exécutée immédiatement et effacée de la file. Les instructions OPa1 et OPb1 restent dans la file du module ALU en attente des opérandes correspondants que doit renvoyer la mémoire en réponse aux instructions LDa1 et LDb1.

Au troisième cycle, le module MEMU reçoit l'instruction STa1. La mémoire renvoie l'opérande demandé par l'instruction LDa1 et requis par l'instruction OPa1. L'instruction OPa1 peut donc être exécutée et effacée de la file.

Au quatrième cycle, le module MEMU reçoit l'instruction STb1. La mémoire renvoie l'opérande demandé par l'instruction LDb1 et requis par l'instruction OPb1. L'instruction OPb1 peut donc être exécutée.

Au cinquième cycle, les modules MEMU et ALU reçoivent les instructions LDa2 et OPa2. L'instruction STal peut être exécutée puisque la valeur qu'elle requiert a été calculée par l'instruction OPa1 deux cycles plus tôt.

Au sixième cycle, les modules MEMU et ALU reçoivent les instructions LDb2 et OPb2. L'instruction STb1 est exécutée, étant donné que la valeur qu'elle requiert a été calculée par l'instruction OPb1 deux cycles plus tôt.

Au septième cycle, le module MEMU reçoit l'instruction STa2. Une nouvelle itération de la boucle est commencée par l'exécution de l'instruction LDa2.

On s'aperçoit dans cette table que le processeur exécute quatre accès mémoire tous les six cycles, ce qui représente une efficacité de 66 % et un gain de 33 % par rapport à la solution précédente.

On s'aperçoit toutefois que la file du module MEMU se remplit progressivement, nécessitant un arrêt régulier de la fourniture d'instructions. Elle se remplit de deux instructions tous les six cycles au lieu de deux instructions tous les quatre cycles comme c'était le cas pour la solution précédente.

La technique du développement des boucles, bien qu'elle améliore sensiblement l'efficacité, ne constitue pas une solution optimale pour les processeurs superscalaires. En fait, elle fonctionne bien mieux sur des processeurs scalaires.

Un objet de la présente invention est de prévoir une architecture de processeur superscalaire qui permette d'obtenir une efficacité maximale lors de l'exécution de boucles incluant des instructions d'accès mémoire.

Cet objet et d'autres sont atteints grâce à un processeur comprenant au moins un module d'accès mémoire destiné à présenter une adresse de lecture ou d'écriture sur un bus d'adresses d'une mémoire en réponse à l'exécution d'une instruction de lecture ou d'écriture ; et un module arithmétique et logique fonctionnant en parallèle avec le module d'accès mémoire et prévu au moins pour présenter une donnée sur un bus de données de la mémoire tandis que le module d'accès mémoire présente une adresse d'écriture. Le processeur comprend une file d'adresses d'écriture dans laquelle est stockée chaque adresse d'écriture fournie par le module d'accès mémoire en attente de la disponibilité de la donnée à écrire.

Selon un mode de réalisation de la présente invention, le module arithmétique et logique comprend deux files d'instructions indépendantes destinées à recevoir des instructions en attente d'exécution, une première des files étant destinée à recevoir des instructions logiques et arithmétiques, et la deuxième file d'instructions étant destinée à recevoir des champs d'instructions fournies au module d'accès mémoire pour identifier des registres du module arithmétique et logique qui font l'objet d'opérations de lecture ou écriture.

Selon un mode de réalisation de la présente invention, le module arithmétique et logique comprend une file de sortie de données dans laquelle chaque donnée à écrire dans la mémoire attend la présence d'une adresse d'écriture dans la file d'adresses d'écriture.

Selon un mode de réalisation de la présente invention, le module arithmétique et logique comprend une file d'entrée de données dans laquelle est écrite chaque donnée provenant de la mémoire à destination du module arithmétique et logique, en attente que le module arithmétique et logique soit disponible pour exploiter la donnée.

Selon un mode de réalisation de la présente invention, le processeur comprend un module de gestion de branchement destiné à recevoir des instructions et à les répartir en parallèle entre lui-même, le module d'accès mémoire et le module arithmétique et logique.

Selon un mode de réalisation de la présente invention, chacun des modules comprend une file de sortie de données dans laquelle chaque donnée à écrire dans la mémoire attend la présence d'une adresse d'écriture dans la file d'adresses d'écriture.

Selon un mode de réalisation de la présente invention, chacun des modules comprend une file d'entrée de données dans laquelle est écrite chaque donnée provenant de la mémoire à destination du module, en attente que le module soit disponible pour exploiter la donnée.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :

la figure 1, précédemment décrite, représente une architecture de DSP classique ; et
la figure 2 représente une architecture de DSP selon la présente invention.

A la figure 2, un processeur selon l'invention comprend, comme celui de la figure 1, deux modules d'accès mémoire 10 (MEMU) et un module logique et arithmétique (ALU), tous couplés à un module de gestion de branchement 14. Les modules 10 et 12 comportent des files d'instructions dans lesquelles le module de branchement BRU empile des instructions en attente d'exécution.

Selon l'invention, chaque module d'accès mémoire MEMU comporte une file d'adresses d'écriture STAQ à partir de laquelle sont fournies les adresses utilisées pour les accès en écriture de la mémoire 16. Les adresses de lecture sont fournies à la mémoire 16 de manière classique, comme cela est représenté par des pointillés qui traversent les files STAQ.

Par ailleurs, le module ALU est muni d'une file de données d'écriture STDQ et d'une file de données de lecture LDDQ par lesquelles transitent les données échangées avec la mémoire. En pratique, tous les modules d'un processeur sont classiquement susceptibles d'échanger des données avec la mémoire et comportent donc, comme cela est représenté, des files STDQ et LDDQ. Les files STAQ, STDQ et LDDQ sont toutes de type premier-entré/premier-sorti (FIFO).

A chaque fois qu'un module MEMU exécute une instruction d'écriture, l'adresse d'écriture est empilée dans la file STAQ correspondante. La donnée à écrire par cette instruction est empilée dans une file de sortie de données STDQ correspondante, généralement du module ALU. Par exemple, si on doit écrire le contenu du registre R1 du module ALU à l'adresse i, le module MEMU qui exécute l'instruction d'écriture empile l'adresse i dans sa file STAQ tandis que le module ALU empile le contenu du registre R1 dans sa file STDQ. On remarquera que la donnée à écrire n'est pas forcément empilée dans la file STDQ en même temps que l'adresse est empilée dans la file STAQ. Ceci constitue un aspect essentiel de l'invention.

A chaque cycle, les contenus des files STDQ et STAQ sont scrutés. Si la file STAQ contient une adresse et l'une des files STDQ contient une donnée, cette donnée est écrite à l'adresse contenue dans la file STAQ, puis les files STDQ et STAQ sont mises à jour. Si ces conditions ne sont pas remplies, c'est-à-dire si la file STAQ est vide ou bien si les files STDQ sont toutes vides, aucune écriture ne peut être effectuée. Le cas où deux files STDQ contiennent une donnée en même temps ne survient jamais.

Dans le cas d'un DSP comportant deux modules d'accès mémoire MEMU, chaque emplacement des files STDQ est susceptible de contenir deux données, une pour chacun des modules MEMU. Alors, pour qu'une écriture se produise, il faut en outre que la donnée contenue dans l'emplacement d'une file STDQ corresponde au module MENU dont la file STAQ n'est pas vide.

Ce mécanisme permet d'exécuter une instruction d'écriture immédiatement, sans tenir compte de la disponibilité du bus mémoire ni de la donnée à écrire. La donnée à écrire sera écrite ultérieurement dès qu'elle et le bus mémoire seront disponibles. Ce mécanisme est décrit ci-après plus en détail à l'aide d'un exemple.

On considère de nouveau l'exemple de boucle (1), programmée sous sa forme la plus directe :

$$\text{LD} : \text{R1} = [\text{i}]$$

$$\text{OP} : \text{R1} = \text{R1} + \text{R2}$$

$$\text{ST} : [\text{i}] = \text{R1}$$

$$\text{BR} : \text{test i, i++, boucler} \tag{1}$$

Comme on l'a précédemment indiqué, une instruction de lecture LD ou d'écriture ST, est constituée de deux champs, l'un destiné au module MEMU pour indiquer l'adresse de lecture ou d'écriture, et l'autre destiné au module ALU pour indiquer le registre qui doit recevoir la donnée lue ou dont le contenu doit être écrit. Ainsi, une instruction LD ci-dessus se décompose en une instruction ALU :

$$LDA : R1 = LDDQ$$

consistant à écrire dans le registre R1 le premier élément de la file de lecture LDDQ, et en une instruction MEMU :

$$LDM : R(i),$$

consistant à présenter l'adresse i en lecture.

Une instruction ST ci-dessus se décompose en une instruction ALU :

$$STA : STDQ = R1$$

consistant à empiler le contenu du registre R1 dans la file d'écriture STDQ et en une instruction MEMU :

$$STM : STAQ = i,$$

consistant à empiler l'adresse d'écriture i dans la file d'adresses STAQ.

Les champs f des instructions de lecture/écriture destinés au module ALU sont, selon l'invention, mis dans une file d'instructions 19 indépendante de la file 18 par laquelle sont reçues les instructions normales II destinées au module ALU (telles que l'instruction OP).

La table ci-dessous illustre, pour plusieurs itérations de la boucle (1), les opérations effectuées par l'un des modules MEMU et le module ALU, et les contenus des files d'instructions des modules MEMU et ALU, les contenus de la file STAQ du module MEMU et enfin les contenus des files STDQ et LDDQ du module ALU. Dans la table, les opérations sont affectées d'un numéro correspondant à l'itération.

| Cycle | Files d'instructions MEMU | Files d'instructions ALU | | Modules MEMU | Modules ALU | Files mémoire MEMU STAQ | Files mémoire MEMU STDQ | Files mémoire ALU LDDQ |
|---|---|---|---|---|---|---|---|---|
| 1 | LDM1 | LDA1 | OP1 | LDM1 | - | | | |
| 2 | STM1 | STA1<br>LDA1 | <br>OP1 | STM1 | - | i | | |
| 3 | LDM2 | LDA2<br>STA1<br>**LDA1** | OP2<br><br>**OP1** | LDM2 | LDA1<br>OP1 | i | | [i] |
| 4 | STM2 | STA2<br>LDA2<br>**STA1** | <br>OP2 | STM2 | STA1 | i+1<br>i | <br>**R1$_1$** | |
| 5 | LDM3 | LDA3<br>STA2<br>**LDA2** | OP3<br><br>**OP2** | LDM3 | LDA2<br>OP2 | i+1 | | [i+1] |
| 6 | STM3 | STA3<br>LDA3<br>**STA2** | <br>OP3 | STM3 | STA2 | i+2<br>**i+1** | <br>**R1$_2$** | |
| 7 | LDM4 | LDA4<br>STA3<br>**LDA3** | OP4<br><br>**OP3** | LDM4 | LDA3<br>OP3 | i+2 | | [i+2] |
| 8 | STM4 | STA4<br>LDA4<br>**STA3** | <br>OP4 | STM4 | STA3 | i+3<br>**i+2** | <br>**R1$_3$** | |

Au premier cycle, les modules MEMU et ALU reçoivent les instructions LD1 et OP1, l'instruction LD1 étant décomposée en une instruction LDM1 fournie au module MEMU et une instruction LDA1 fournie au module ALU. L'instruction LDM1, consistant à émettre une adresse en lecture, est immédiatement exécutée. L'instruction LDA1 est mise en attente, car elle requiert une valeur de la file de lecture LDDQ, qui est vide. L'instruction OP1, qui requiert cette même valeur, est également mise en attente.

Au deuxième cycle, le module MEMU reçoit l'instruction ST1, décomposée en une instruction STM1 fournie au module MEMU et une instruction STA1 fournie au module ALU. L'instruction STM1 est exécutée et provoque l'empilement dans la file STAQ de l'adresse i à laquelle devra être écrit le résultat de l'opération OP1. L'instruction STA1 est mise en attente derrière l'instruction LDA1.

Au troisième cycle, les modules MEMU et ALU reçoivent les instructions LD2 (LDM2, LDA2) et OP2. La mémoire fournit à la file LDDQ la valeur [i] demandée par l'instruction LDM1. L'instruction LDA1 est exécutée et provoque le transfert de la valeur [i] de la file LDDQ vers le registre R1. L'instruction OP1 est exécutée et met à jour le contenu du registre R1. Le module MEMU étant libre, on exécute également l'instruction LDM2.

Au quatrième cycle, le module MEMU reçoit l'instruction ST2 (STM2, STA2). Les instructions STM2 et STA1 sont exécutées. L'instruction STA1 provoque la recopie du contenu R1$_1$ du registre R1 dans la file STDQ. L'instruction STM2 provoque l'empilement dans la file STAQ de l'adresse i+1 à laquelle devra être écrit le résultat de l'opération OP2. Dans le même cycle, on détecte que la file STAQ contient une adresse i et que la file STDQ du module ALU contient une donnée R1$_1$. Le bus mémoire étant disponible, la donnée R1$_1$ est immédiatement écrite à l'adresse i et les files STAQ et STDQ sont mises à jour.

Au cinquième cycle, les opérations du troisième cycle se répètent pour une nouvelle itération de boucle.

La table ci-dessus illustre que le module mémoire MEMU exécute une instruction d'accès à chaque cycle. L'efficacité est donc maximale. Par ailleurs, les files d'instructions ne se remplissent pas. Il n'est donc pas nécessaire de régulièrement arrêter la fourniture d'instructions pour éviter le débordement des files.

On s'aperçoit également, dans cet exemple, que les files STDQ et LDDQ reçoivent au plus un élément. Ces files pourraient donc être réduites à un simple registre, lequel registre est généralement prévu dans un module classique pour verrouiller les données entrantes et sortantes.

Dans d'autres cas, pour des boucles plus complexes, il peut s'avérer que les files STDQ et LDDQ reçoivent plus d'un élément. Alors, le nombre d'emplacements des files STDQ et LDDQ est augmenté pour éviter tout risque de débordement.

**Revendications**

1. Processeur comprenant :

   - au moins un module d'accès mémoire (MEMU) destiné à présenter une adresse de lecture ou d'écriture sur un bus d'adresses d'une mémoire (16) en réponse à l'exécution d'une instruction de lecture ou d'écriture ;
   - un module arithmétique et logique (ALU) fonctionnant en parallèle avec le module d'accès mémoire et prévu au moins pour présenter une donnée sur un bus de données de la mémoire tandis que le module d'accès mémoire présente une adresse d'écriture ;

   caractérisé en ce qu'il comprend une file d'adresses d'écriture (STAQ) dans laquelle est stockée chaque adresse d'écriture fournie par le module d'accès mémoire en attente de la disponibilité de la donnée à écrire.

2. Processeur selon la revendication 1, caractérisé en ce que le module arithmétique et logique (ALU) comprend deux files d'instructions indépendantes (18, 19) destinées à recevoir des instructions en attente d'exécution, une première (18) des files étant destinée à recevoir des instructions logiques et arithmétiques, et la deuxième file d'instructions (19) étant destinée à recevoir des champs (f) d'instructions fournies au module d'accès mémoire (MEMU) pour identifier des registres du module arithmétique et logique (ALU) qui font l'objet d'opérations de lecture ou d'écriture.

3. Processeur selon la revendication 1, caractérisé en ce que le module arithmétique et logique (ALU) comprend une file de sortie de données (STDQ) dans laquelle chaque donnée à écrire dans la mémoire (16) attend la présence d'une adresse d'écriture dans la file d'adresses d'écriture (STAQ).

4. Processeur selon la revendication 1 ou 3, caractérisé en ce que le module arithmétique et logique (ALU) comprend une file d'entrée de données (LDDQ) dans laquelle est écrite chaque donnée provenant de la mémoire (16) à destination du module arithmétique et logique, en attente que le module arithmétique et logique soit disponible pour exploiter la donnée.

5. Processeur selon la revendication 1, caractérisé en ce qu'il comprend un module de gestion de branchement (BRU) destiné à recevoir des instructions et à les répartir en parallèle entre lui-même, le module d'accès mémoire (MEMU) et le module arithmétique et logique (ALU).

6. Processeur selon la revendication 5, caractérisé en ce que chacun des modules comprend une file de sortie de données (STDQ) dans laquelle chaque donnée à écrire dans la mémoire attend la présence d'une adresse d'écriture dans la file d'adresses d'écriture (STAQ).

7. Processeur selon la revendication 5 ou 6, caractérisé en ce que chacun des modules comprend une file d'entrée de données (LDDQ) dans laquelle est écrite chaque donnée provenant de la mémoire à destination du module, en attente que le module soit disponible pour exploiter la donnée.

INST

14

I1          BRU          I3

f

18                    I2    18              18              10

12    ALU        MEMU          MEMU

10

10

MEM          16

Fig 1

14

BRU

I1          STDQ  LDDQ          I2          I3

f

18              18              18

12    ALU    19              10    MEMU          MEMU    10

STDQ  LDDQ          STDQ  LDDQ  STAQ          STDQ  LDDQ  STAQ

A          A

16          MEM

Fig 2

**Office européen des brevets**

## RAPPORT DE RECHERCHE EUROPEENNE

Numéro de la demande

EP 99 41 0030

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US 5 664 215 A (DENMAN MARVIN ET AL) 2 septembre 1997 (1997-09-02) * colonne 4, ligne 9 – colonne 6, ligne 17 * * colonne 9, ligne 50 – colonne 13, ligne 56 * --- | 1,2,5 | G06F9/38 |
| A | EP 0 651 323 A (ADVANCED MICRO DEVICES INC) 3 mai 1995 (1995-05-03) * colonne 7, ligne 22 – colonne 9, ligne 16 * ----- | 1 | |

DOMAINES TECHNIQUES RECHERCHES (Int.Cl.6)

G06F

Le présent rapport a été établi pour toutes les revendications

| Lieu de la recherche | Date d'achevement de la recherche | Examinateur |
|---|---|---|
| LA HAYE | 27 juillet 1999 | Michel, T |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet anterieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 99 41 0030

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

27-07-1999

| Document brevet cité au rapport de recherche | Date de publication | Membre(s) de la famille de brevet(s) | | Date de publication |
|---|---|---|---|---|
| US 5664215 A | 02-09-1997 | CN | 1144934 A | 12-03-1997 |
| | | DE | 69506623 D | 28-01-1999 |
| | | DE | 69506623 T | 22-07-1999 |
| | | EP | 0686912 A | 13-12-1995 |
| | | JP | 9120360 A | 06-05-1997 |
| EP 0651323 A | 03-05-1995 | US | 5878245 A | 02-03-1999 |
| | | JP | 7182167 A | 21-07-1995 |

EPO FORM P0460

Pour tout renseignement concernant cette annexe : voir Journal Officiel de l'Office européen des brevets, No.12/82